# EUROPEAN PATENT APPLICATION

(11) **EP 3 991 833 A1**
(43) Date of publication of application: **04.05.2022**
(21) Application number: 20204981.3
(22) Date of filing: 30.10.2020
(51) Int. Cl.: B01J 7/00, B01J 8/00, B01J 19/18, C01B 3/02

(54) **SYSTEM FOR ON-DEMAND PRODUCTION OF HYDROGEN FROM A CARRIER FLUID AND DISPOSAL OF SOLID BYPRODUCTS**

(71) Applicant: Hysilabs, SAS, 13100 Aix-en-Provence (FR)
(72) Inventor: MUSSOT, Jean-Luc, 26000 VALENCE (FR); LOME, Vincent, 13002 Marseille (FR)
(74) Representative: de Jong, Jean Jacques

(57) **Abstract**

A device is provided for controlled production of a gas from first and second fluid reagents that, when mixed, produce the gas and a byproduct, the device comprising a reactor cylinder (10); inlets (12a, 12b) configured to supply the reactor cylinder with the first and second reagents (HC, PS); a gas discharge circuit (18) connected to the reactor cylinder; a piston (14) inside the reactor cylinder, actuated from a first end of the reactor cylinder to move axially inside the cylinder to compress any byproduct against the second end of the cylinder and to expel any gas through the gas discharge circuit (18), wherein the gas discharge circuit is connected to the cylinder near the second end of the cylinder; and a closure device (22) at the second end of the cylinder, having a closed position sealing the second end of the cylinder, and an open position fully freeing the second end of the cylinder so that any byproduct in the cylinder can be shifted out by the piston (14).

## Description

### Field

The present invention relates to hydrogen carrier compounds, and more specifically to collecting the production of hydrogen from a liquid hydrogen carrier. The production system may be applied more generally to any gas generated by mixing fluid reagents leaving a solid byproduct.

### Background

Hydrogen carrier compounds can convey large amounts of hydrogen in solid or liquid form, which facilitates the transport of hydrogen. Such hydrogen carriers may be of the family of silylated derivatives, more specifically of hydrogen-polysiloxanes, having the general formula (HRSiO)ₙ. In order to extract the hydrogen, the hydrogen carrier compound is mixed with a so-called proton source, often water, in the presence of catalysts - see for instance patent applications WO2010094785 and WO2011098614. After the hydrogen is produced, a byproduct remains that needs to be removed from the system and eventually recycled.

A difficulty resides in extracting the hydrogen on-demand from such components while removing the byproducts without leaking hydrogen, especially when the byproducts are solid. Patent application WO2012151582 discloses a hydrogen generation system based on solid hydrogen carriers, capable of removing solid byproducts.

### Summary

A device is generally provided for controlled production of a gas from first and second fluid reagents that, when mixed, produce the gas and a byproduct, the device comprising a reactor cylinder; inlets configured to supply the reactor cylinder with the first and second reagents; a gas discharge circuit connected to the reactor cylinder; a piston inside the reactor cylinder, actuated from a first end of the reactor cylinder to move axially inside the cylinder to compress any byproduct against the second end of the cylinder and to expel any gas through the gas discharge circuit, wherein the gas discharge circuit is connected to the cylinder near the second end of the cylinder; and a closure device at the second end of the cylinder, having a closed position sealing the second end of the cylinder, and an open position fully freeing the second end of the cylinder so that any byproduct in the cylinder can be shifted out by the piston.

The gas discharge circuit may comprise a high-pressure gas circuit connected to the cylinder through a check valve; and a low-pressure gas circuit connected to the cylinder through an operated valve.

The piston may include a peripheral seal ring offset from the piston end, such that, when the piston is in a position compressing the byproduct against the second end of the cylinder, a piston wall portion between the seal ring and the end of the piston faces an access port of the gas discharge circuit.

A method is also provided for controlling the production of a gas, comprising the steps of producing the gas and a byproduct by mixing first and second fluid reagents in a reactor cylinder; gathering the produced gas through a gas discharge circuit connected to the cylinder; compressing the byproduct against an end of the cylinder by a movable piston, while expelling gas remaining in the cylinder through the gas discharge circuit, wherein the gas discharge circuit is connected radially to the cylinder near the end of the cylinder; fully opening the end of the cylinder; and ejecting the byproduct through the end of the cylinder with the piston.

The method may comprise the further steps of gathering the produced gas through a check-valve; and after compressing the byproduct and before opening the end of the cylinder, venting gas remaining in the cylinder through a low-pressure gas circuit connected to the cylinder near the end of the cylinder.

The first reagent may be a liquid hydrogen carrier and the second reagent a liquid proton source, whereby the produced gas is hydrogen.

The hydrogen carrier may be a liquid silylated derivative.

The hydrogen carrier may be a liquid dihydrogen-polysiloxane, producing a solid byproduct essentially comprised of silicate.

### Brief Description of Drawings

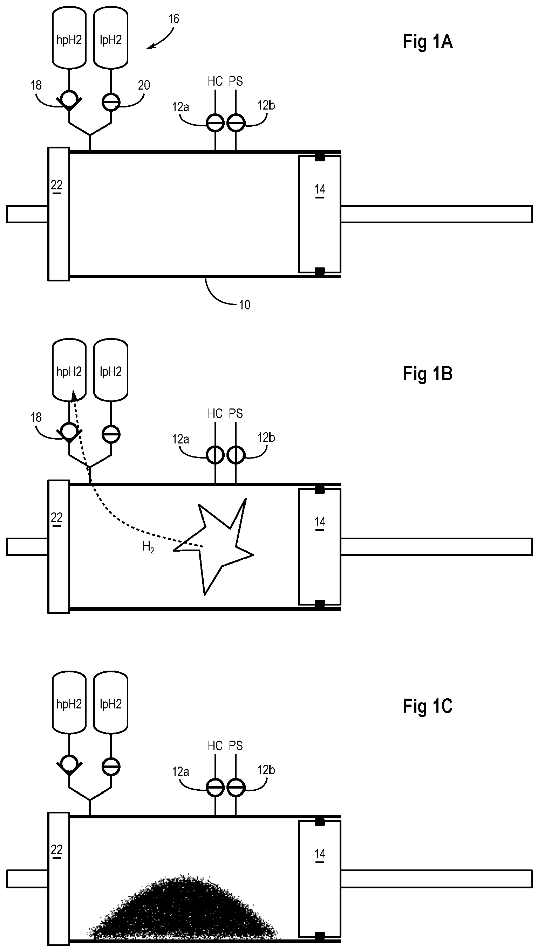

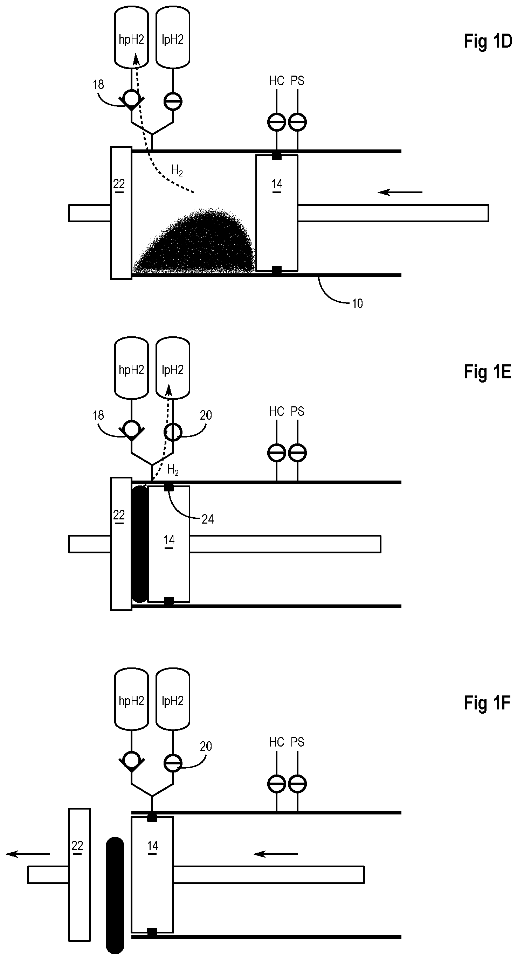

Other advantages and features will become more clearly apparent from the following description of particular embodiments of the invention provided for exemplary purposes only and represented in the appended drawings, in which:
▪ Figures 1A-1F illustrate an embodiment of a device for producing hydrogen from a liquid hydrogen carrier leaving a solid byproduct, in different phases of a production cycle.

### Description of Embodiments

Figure 1A is a schematic diagram of an embodiment of a device for producing hydrogen on-demand from the reaction of two reagents that may both be provided in liquid form. The device has a byproduct removal mechanism capable of processing a solid byproduct with negligible leakage of hydrogen.

The device comprises a reactor cylinder 10, having respective valve operated inlets 12a, 12b for the two reagents, i.e. a hydrogen carrier HC and a proton source PS. The inlets are radial and arranged in the wall of the cylinder, for instance centrally.

A piston 14 arranged inside the cylinder is configured to move axially between both ends of the cylinder. In the figures, the piston is actuated from the right end of the cylinder by conventional means not shown.

A gas discharge circuit 16 is radially connected to the wall of the cylinder near the left end. The discharge circuit may include a high-pressure circuit with a hydrogen storage tank hpH2 connected to the cylinder through a check-valve 18. The discharge circuit preferably also includes a low-pressure circuit with a hydrogen storage tank lpH2 connected to the cylinder through an operated valve 20.

The terms "high pressure" and "low pressure" are intended to be relative rather than quantitative. The actual pressure in the high-pressure tank may vary significantly during operation and depends on the application, but it is generally greater than the pressure in the low-pressure tank. The pressure in the low-pressure tank may in practice be around the atmospheric pressure.

The left end of the cylinder 10 is closed by a removable cover, such as a piston 22, configured such that, when shifted to the left, the corresponding end of the cylinder stands open without obstructions.

Figure 1A corresponds to an initial phase of an operating cycle of the device, where the cylinder is empty and ready to receive the reagents HC and PS. The controlled valves 12a, 12b and 20 are all closed.

Figure 1B corresponds to a second phase, a reaction phase. The valves 12a, 12b are opened, letting the reagents HC and PS into the cylinder, where they mix and react with each other, producing hydrogen H₂. The hydrogen is discharged into the high-pressure circuit through the check-valve 18 as it is produced, where it may fill the tank hpH2 or be directly consumed. The reaction produces a solid byproduct that starts filling the cylinder 10.

In figure 1C, the cylinder 10 is saturated with the byproduct, here shown as a heap of powder. In practice, the byproduct may be in the form of a porous and brittle cake. The reagent feeds are shut off with the valves 12a, 12b. The actual saturation threshold may be defined as the maximum quantity of byproduct that can be efficiently processed in the subsequent steps, which is in practice less than the volume of the cylinder.

In figure 1D, the piston 14 is moved inwards towards the opposite end of the cylinder 10. As it moves, the piston 14 compresses the byproduct against the closure piston 22 and expels the hydrogen remaining in the cylinder through the check-valve 18 into the storage tank hpH2.

In figure IE, the byproduct has been compacted into a pellet that occupies substantially all the volume in the cylinder between the pistons 14 and 22. Ideally, the pressure exerted by the piston 14 is sufficient to collapse all pores in the byproduct pellet, and thus expel all the gaseous hydrogen contained in the byproduct. In practice, such a pressure may not be achievable, and the piston actuator is set to apply a pressure below the rupture limits of the components.

In this position, the cylinder still contains hydrogen in the residual volume inside and around the byproduct pellet, at the pressure of the high-pressure storage tank hpH2. This residual volume being negligible, the cylinder could be opened at this stage to eject the byproduct pellet, thereby also letting out some hydrogen in the open air, that could be evacuated harmlessly with suitable ventilation.

Preferably, the amount of residual hydrogen let out into the open air is reduced significantly by using the low-pressure gas circuit including the valve 20 and the low-pressure hydrogen tank lpH2. To this end, in the stage of figure IE, the valve 20 is opened, whereby the high-pressure residual hydrogen in the cylinder is vented into the low-pressure tank lpH2. The check-valve 18 prevents hydrogen in the high-pressure tank hpH2 from returning into the cylinder as the pressure in the cylinder drops and equalizes with the pressure in the low-pressure tank lpH2.

For a correct operation of the hydrogen venting process, the gas discharge circuit should remain connected to the portion of the cylinder containing the residual hydrogen throughout the byproduct compacting process. Preferably, the access port of the discharge circuit is not directly in contact with the byproduct pellet, since some of the byproduct could end up penetrating the port and obstructing it. As shown, in the configuration of figure IE, the discharge circuit port may be located facing a wall portion of the piston rather than the byproduct pellet. To allow venting of the residual hydrogen, any seal ring of the piston is offset from the end of the piston beyond the discharge circuit port, as shown for one seal ring 24, so that the residual hydrogen can flow to the discharge circuit through the clearance between the piston and the cylinder.

In figure IF, the valve 20 is closed as the cylinder end is opened by shifting the closure piston 22 towards the left. The byproduct pellet is ejected from the cylinder by further moving piston 14 to the left, to a position where it is flush with the cylinder end.

To return to the configuration of figure 1A and start a new hydrogen production cycle, the piston 22 is moved back to close the cylinder end, and the piston 14 is moved back to the opposite end of the cylinder. Thus moving the piston 14 creates a vacuum in the cylinder, avoiding the produced hydrogen to be mixed with air at each cycle. Alternatively, the valve 20 could be opened as the piston 14 is moved back, filling the cylinder with low-pressure hydrogen. If the pressure in the low-pressure tank lpH2 is higher than the atmospheric pressure, it may even push the piston. Yet another alternative is to push the piston 14 back with the hydrogen contained in the high-pressure tank hpH2, by operating a valve (not shown) that bypasses the check-valve 18.

Each cycle increments the hydrogen pressure in tanks hpH2 and lpH2, if the hydrogen is not consumed on the fly. The pressure in tank hpH2, originating from the principal hydrogen generation process, builds up much faster than the pressure in tank lpH2, which originates in principle from residual hydrogen left after the byproduct compression. In practice, the tank hpH2 may reach pressures of several tens of bars, whereas the pressure in tank lpH2 may sit around 1 bar. Hence, the high-pressure tank hpH2 is suitable for storing hydrogen, whereas the low-pressure tank lpH2 may be used for immediate low-pressure applications, such a supplying hydrogen fuel-cells.

As previously mentioned, the hydrogen carrier reagent HC may be of the family of hydrogen-methyl-polysiloxanes, having the general formula (HRSiO)ₙ, which are available in liquid form. The proton source reagent PS may simply be water, among other possibilities. The resulting byproduct is however difficult to recycle.

A preferred hydrogen carrier would be of the family of dihydrogen-polysiloxanes, having the general formula (H₂SiO)ₙ, because their byproduct is essentially corresponding silicate, which can be readily recycled back into a hydrogen carrier. Such a compound also reacts with water as a proton source, among other possibilities.

Dihydrogen-polysiloxanes have only been found in solid form and have been difficult to produce industrially. However, patent application EP18305549 discloses a method for producing dihydrogen-polysiloxanes industrially in liquid form, which makes them particularly well suited for use in the present system.

The system disclosed herein is applicable to the production of gas from any fluid reagents that leave a solid byproduct. Although the device has been specifically designed to process solid byproducts, it may also be used to process a liquid byproduct in a very similar manner. With a liquid byproduct, in stage IE, the piston 14 may be actuated in a controlled manner, such that it stops when the liquid byproduct reaches the port of the gas discharge circuit, located at the highest point of the cylinder. The amount of residual hydrogen will be close to zero in this case, especially if the liquid byproduct is fluid enough to fill all the volume in the cylinder up to the gas discharge port.

## Claims

1. A device for controlled production of a gas from first and second fluid reagents that, when mixed, produce the gas and a byproduct, comprising:
• a reactor cylinder (10);
• inlets (12a, 12b) configured to supply the reactor cylinder with the first and second reagents (HC, PS);
• a gas discharge circuit (18) connected to the reactor cylinder;
**characterized in that** it comprises:
• a piston (14) inside the reactor cylinder, actuated from a first end of the reactor cylinder to move axially inside the cylinder to compress any byproduct against the second end of the cylinder and to expel any gas through the gas discharge circuit (18), wherein the gas discharge circuit is connected to the cylinder near the second end of the cylinder; and
• a closure device (22) at the second end of the cylinder, having a closed position sealing the second end of the cylinder, and an open position fully freeing the second end of the cylinder so that any byproduct in the cylinder can be shifted out by the piston (14).

2. The device of claim 1, wherein the gas discharge circuit comprises:
• a high-pressure gas circuit connected to the cylinder through a check valve (18); and
• a low-pressure gas circuit connected to the cylinder through an operated valve (20).

3. The device of claim 1, wherein the piston includes a peripheral seal ring (24) offset from the piston end, such that, when the piston is in a position compressing the byproduct against the second end of the cylinder, a piston wall portion between the seal ring and the end of the piston faces an access port of the gas discharge circuit.

4. A method for controlling the production of a gas, comprising the following steps:
• producing the gas and a byproduct by mixing first and second fluid reagents (HC, PS) in a reactor cylinder (10);
• gathering the produced gas through a gas discharge circuit (18) connected to the cylinder;
**characterized in that** it comprises the steps of:
• compressing the byproduct against an end of the cylinder by a movable piston (14), while expelling gas remaining in the cylinder through the gas discharge circuit, wherein the gas discharge circuit is connected radially to the cylinder near the end of the cylinder;
• fully opening the end of the cylinder; and
• ejecting the byproduct through the end of the cylinder with the piston.

5. The method of claim 4, comprising the further steps of:
• gathering the produced gas through a check-valve (18); and
• after compressing the byproduct and before opening the end of the cylinder, venting gas remaining in the cylinder through a low-pressure gas circuit (20) connected to the cylinder near the end of the cylinder.

6. The method of claim 4, wherein the first reagent is a liquid hydrogen carrier (HC) and the second reagent is a liquid proton source (PS), whereby the produced gas is hydrogen.

7. The method of claim 6, wherein the hydrogen carrier is a liquid silylated derivative.

8. The method of claim 6, wherein the hydrogen carrier is a liquid dihydrogen-polysiloxane, producing a solid byproduct essentially comprised of silicate.
